# EUROPEAN PATENT APPLICATION

(11) **EP 3 130 779 A1**
(43) Date of publication of application: **15.02.2017**
(21) Application number: 15777535.4
(22) Date of filing: 06.02.2015
(51) Int. Cl.: F02C 6/00, F03G 6/02, F01K 27/00

(54) **SOLAR THERMAL AND BIGCC-INTEGRATED HYBRID POWER GENERATION SYSTEM**

(30) Priority: 11.04.2014 CN 201410144008
(71) Applicant: Wuhan Kaidi Engineering Technology Research Institute Co., Ltd., Wuhan, Hubei 430223 (CN)
(72) Inventor: CHEN, Yilong, Wuhan Hubei 430212 (CN); ZHANG, Yanfeng, Wuhan Hubei 430212 (CN); TANG, Hongming, Wuhan Hubei 430212 (CN); LIU, Wenyan, Wuhan Hubei 430212 (CN)
(74) Representative: Zeuner Summerer Stütz
(86) International application number: PCT/CN2015/072397
(87) International publication number: WO 2015/154584

(57) **Abstract**

A solar thermal and BIGCC-integrated hybrid power generation system comprising a solar energy concentrating collector system (9), biomass gasification equipment (1), a gas-fired electric generator (7), a steam turbine (13), and a steam electric generator (14). The solar energy concentrating collector system (9) is connected to a solar energy heat exchange system (11). The biomass gasification equipment (1) is connected to the gas-fired electric generator (7) via a gas compressor (3), a combustion chamber (5), and a gas turbine (6). An output of the gas turbine (6) is simultaneously connected to a gas residual heat system (8). A low-pressure steam output of the gas residual system (8) is connected to a medium/low-pressure cylinder of the steam turbine (13). A high-pressure steam output of the gas residual system (8) and high-pressure steam produced by the solar energy heat exchange system (11) are both connected to a steam mixture regulating system (12). An output of the steam mixture regulating system (12) is connected to a high-pressure cylinder of the steam turbine (13). By means of the steam mixture regulating system, mixture of steams of different temperatures is implemented, and the temperature of the mixed steam is regulated and controlled, thus satisfying steam requirements of a variable parameter steam turbine.

## Description

### FIELD OF THE INVENTION

The invention relates to a combined power generation system integrated with the light and heat of the solar energy and the BIGCC, and belongs to the utilization technology of the combined power generation of the light and the heat of the solar energy and the biomass energy in the field of the renewable energy resource, more particularly to a new combined power generation system integrated with the light and the heat of the solar energy, the biomass gasification, the fuel gas-steam combined cycle (BIGCC).

### BACKGROUND OF THE INVENTION

Solar energy and biomass energy are widespread and renewable clean energy, and the economic and effective utilization thereof is the most effective way to solve the energy crisis.

The photothermal power generation and the common thermal power generation are the same in their working principle but different in the heat source. The solar energy photothermal power generation is using the concentrating system to concentrate the radiation energy of the sun, and based on photothermal conversion, and thermal-electrical conversion, the photothermal power generation of the solar energy is realized.

Primary concentrating methods of the solar energy are through type, tower type, disc type, and Fresnel type. The through type system has simple structure and only requires single axis tracking. The technique is mature and has been the real industrialized photothermal power generation system. The tower type requires two axes tracking and impose high requirement on the tracking technique, thus having great risk in industrialized technique. The disc type has compact structure and convenient installation that are apt to distributive energy system but the technique difficulty of the core part Stirling engine is great. The Fresnel type is only adaptable to small scale of middle-low temperature solar energy heat. Thus, the through type solar energy power generation is the most reliable and more reasonable choice in the current phase.

However, problems exist in practical application of the through type solar energy photothermal power generation technology.

High investment: the energy density of the solar energy is low, and a large area is required for the solar energy concentration.

Low grade of the thermal concentration: the through type system adopts the conductive oil as the heat concentrating medium, while the conductive oil can only bear a high temperature of 400°C, and the steam produced from the thermal exchange can only reach a temperature of approximately 390°C, while the lowest temperature of the primary steam of the common turbine reaches 435°C above.

Unstable photothermal supply: with the time and the diurnal variation, the photothermal supply exists with fluctuation and intermittence.

Such characteristics determines that the solar energy photothermal power generation has low efficiency and high production cost. The power plant operates in daytime and stops at night, the time for power generation is short, and the utilization rate of the device is low. The device is frequently started and stopped, which greatly impulses the devices and effects the service life of the device.

In present, power generation mode of pure solar energy heat with auxiliary heating device, or power generation mode of natural gas integrated with ISCC combined cycle is adopted in foreign countries. The former is discontinuously operated, and the economic effect of the power plant is relatively poor; for the later, the conditions for the establishment of the power plant adopting the same are harsh, which still depend on the conventional fossil energy and requires large investment, thus being difficult to apply in large scale.

It is an important research direction for the current through type solar energy thermal power generation system to fine a common power generation platform to apply for realizing highly efficient and continuous operation thereof.

### SUMMARY OF THE INVENTION

In view of the above-described problems, it is one objective of the invention to provide a combined power generation system integrated with solar energy and BIGCC. The system utilizes the characteristics of the sliding parameter operation and the Rankine cycle of the steam of the BIGCC to integrate the light and the heat of the solar energy to the Rankine cycle of the steam of the BIGCC, so that a power generation system involving step utilization of integration of the double energy resources and double cycles is formed, the problems of low temperature, and intermittence and instability of the solar energy supply existing in the through type photothermal steam power generation.

Technical scheme of the invention is as follows: a combined power generation system integrated with solar energy and BIGCC comprises: a solar energy concentration and heat collection system, a biomass gasification device, a gas generator, a steam turbine, and a steam generator. The solar energy concentration and heat collection system is connected to a solar energy heat exchange system. The biomass gasification device is connected to the gas generator via a first gas compressor, a combustion chamber, and a gas turbine; an output of the gas turbine is also connected to a gas exhaust heat system. A low pressure steam output of the gas exhaust heat system is connected to a middle-lower pressure cylinder of the steam turbine. A high pressure steam output of the gas exhaust heat system and a high pressure steam output of the solar energy heat exchange system are connected to a steam mixing regulating system. An output of the steam mixing regulating system is connected to a high pressure cylinder of the steam turbine.

The steam mixing regulating system comprises a mixer housing. A high pressure steam injection pipe is protruded from a rear end of the mixer housing into a middle-front part of a cavity of the mixer housing. A front end of the high pressure steam injection pipe is sealed, steam nozzles are distributed on a front part of a pipe wall of the high pressure steam injection pipe, and a high pressure steam inlet is disposed at a rear end of the high pressure steam injection pipe. A water injection pipe is installed inside the high pressure steam inlet in a rear part of the high pressure steam injection pipe. Water nozzles are distributed on a part of the water injection pipe extended into the high pressure steam injection pipe, and an inlet of the water injection pipe is disposed at an end thereof outside the high pressure steam injection pipe and connected to a solenoid valve. An outer wall of a rear part of the mixer housing is provided with a steam inlet for introducing in steam from the solar energy heat exchange system. A temperature detector is disposed on an outer wall of a front part of the mixer housing. A probe of the temperature detector is extended into the cavity of the mixer housing. A signal wire of the temperature detector is connected to a temperature controller. A control output terminal of the temperature controller is connected to the solenoid valve disposed at an end of the water injection pipe outside the high pressure steam injection pipe. A front end of the mixer housing is a mixed steam outlet.

A liner tube is disposed in a middle-rear part of the high pressure steam injection pipe; the liner tube is disposed between the high pressure steam inlet and a rear part of a distributed region of the steam nozzles. Outer rings at two ends of the liner tube are sealed from the mixer housing.

The solar energy heat exchange system comprises: a heater, an evaporator, and a superheater. The superheater is connected to a conductive oil system of the solar energy concentration and heat collection system. A conductive oil pipe passes through the evaporator and the heather. A low temperature conductive oil outlet of the heater is connected to an oil return port of the conductive oil system of the solar energy concentration and heat collection system. A heat exchange water pipe is disposed inside the heater, and the heat exchange water pipe is connected an internal of the evaporator. A steam-water separator is disposed at an upper end of the evaporator. A steam outlet of the steam-water separator is connected to a steam pipe, the steam pipe passes through the superheater, and an outlet of the superheater is connected to the steam mixing regulating system.

Pararneters of a high pressure steam of the gas exhaust heat system are as follows a high pressure of 10 megapascal or a middle pressure of 3.82 megapascal, and a steam temperature of 485°C; parameters of a steam of the solar energy heat exchange system are as follows: a high pressure of 10 megapascal or a middle pressure of 3.82 megapascal, and a steam temperature of 390°C; and a temperature of a mixed steam supplied to the steam turbine is 435°C.

The system further comprises a solar energy heat storage system; and the solar energy heat storage system is respectively connected to the solar energy heat exchange system and the solar energy concentration and heat collection system.

Compared with the prior art, advantages of the invention are summarized as follows:

1. A new combined power generation system integrated with light and heat of the solar energy, biomass gasification, gas-steam combined cycle (BIGCC) is established, so that the combined power generation mode of the double energy sources of the light and the heat of the solar energy and the biomass, and the stacked double cycles of the Braden cycle of the gas and the Rankine cycle of the steam are realized.

2. Compared with the complement of the light and heat into the regenerative system of the gas turbine, the photothermal utilization of the system of the invention is effective multi-step and step utilization process including heating, evaporating, and superheating of the working medium.

3. The heat source of the BIGCC system is utilized, the configuration of the photothermal power generation is simplified, the light field is not configured with auxiliary heating device or turbines or electric generator that adopts the photothermal steam and the exhaust heat steam of the BIGCC, so that the investment into the photothermal power generation device is reduced.

4. The steam mixing regulating system is configured, so that the mixing of steams of different temperatures is realized. In addition, the temperature of the mixed steam is regulated to meet the steam requirement on the sliding parameters steam turbine.

5. By configuration of the heat storage and the system integration, the intermittence and instability of the solar energy supply are effectively solved.

6. Based on the clean and effective system platform of the BIGCC, the efficiency of the photothermal power generation is improved. The steam turbine and the auxiliary heating device for the photothermal power generation and the system investment thereof are saved, the investment production of the photothermal power generation are reduced. The biomass resource in the proximity of the power plant is utilized, thus making ISCC independent from the natural gas resource and the supply network. In addition, the light and the heat are effectively complemented, the installed capacity of the combined power plant, and the economic benefit and the environmental benefit of the combined power plant are improved.

7. The combined power plant is made independent from the natural gas resource and the supply network.

8. The replenishment of the light and the heat is adopted, the installed capacity of the combined power plant is enlarged, and the economic and environmental benefits of the power plant are improved.

### BRIEF DESCRIPTION OF THE DRAWINGS

FIG. **1** is a diagram showing main devices and process of a combined power generation system integrated with solar energy and BIGCC;
FIG **2** is a structure diagram of a solar energy heat exchange system of FIG. **1****;** and
FIG **3** is a structure diagram of a steam mixing regulating system of FIG **1****.**

In the drawings, the following reference numbers are used: **1.** Biomass gasification device; **2.** Gas purification device; **3**, First gas compressor; **4.** Second gas compressor; **5.** Combustion chamber; **6**. Gas turbine; 7. Gas generator; **8.** Gas exhaust heat system; **9**. Solar energy concentration and heat collection system; **10.** Solar energy heat storage system; **11.** Solar energy heat exchange system; **12.** Steam mixing regulating system; **13**, Steam turbine; and **14.** Steam generator.

### DETAILED DESCRIPTION OF THE EMBODIMENTS

To achieve the objective of the invention, the following technical solution is provided. Combined with a steam Rankine cycle as a bottom cycle of BIGCC and the characteristics of the operation of the sliding-parameters of the steam turbine, a system of the steam mixing regulating system is established. A through type solar energy photothermal steam and the exhausted high pressure steam of the BIGCC are mixed, and a temperature of a resulting mixed steam is regulated, then the mixed steam is utilized as a primary steam and sent to a steam turbine to do work while expanding, thus driving the generator for power generation and realizing power generation of both the solar energy photothermal steam and the exhausted high pressure steam of the BIGCC.

Detailed embodiments of the invention are further described hereinbelow combined with the drawings.

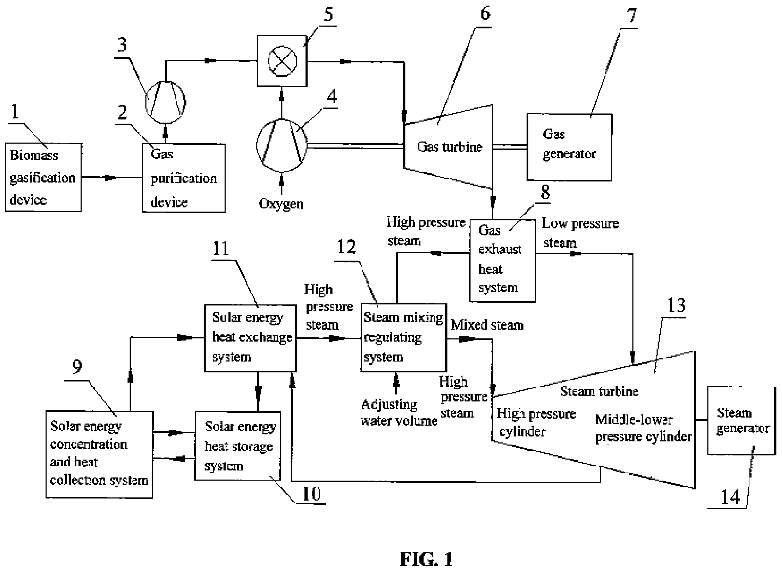

As shown in FIG **1****,** a combined power generation system integrated with solar energy and HIGCC, the system comprises: a solar energy concentration and heat collection system **9,** a biomass gasification device **1,** a gas generator **7,** a steam turbine **13**, and a steam generator **14**, The solar energy concentration and heat collection system **9** is connected to a solar energy heat exchange system **11.** The biomass gasification device **1** is connected to the gas generator **7** via a first gas compressor **3**, a combustion chamber **5,** and a gas turbine **6;** an output of the gas turbine **6** is also connected to a gas exhaust heat system **8**. A low pressure steam output of the gas exhaust heat system **8** is connected to a middle-lower pressure cylinder of the steam turbine **13.** A high pressure steam output of the gas exhaust heat system **8** and a high pressure steam output of the solar energy heat exchange system **11** are connected to a steam mixing regulating system **12.** An output of the steam mixing regulating system **12** is connected to a high pressure cylinder of the steam turbine **13. 2** is a gas purification device, and **4** is a Second gas compressor. A solar energy heat storage system **10** is configured to connect to the solar energy heat exchange system **11** and the solar energy concentration and heat collection system **9,** respectively.

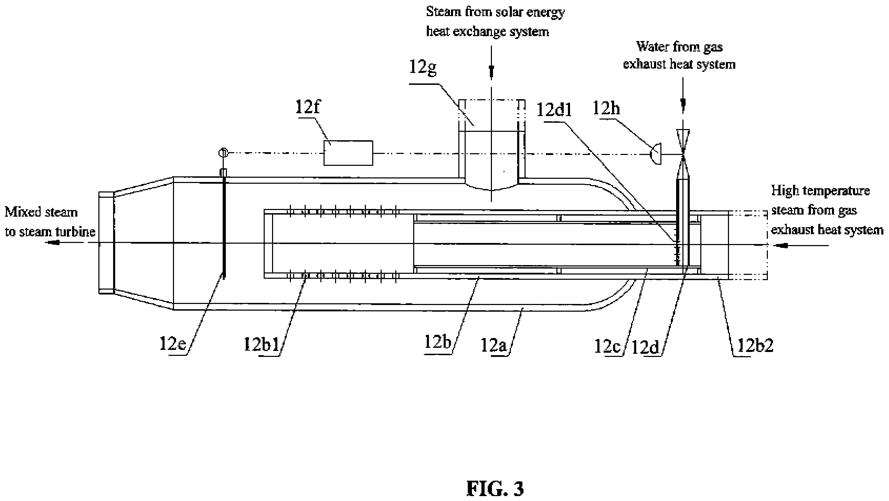

FIG. **3** is a structure diagram of a steam mixing regulating system.

The steam mixing regulating system **12** comprises a mixer housing **12a.** A high pressure steam injection pipe **12b** is protruded from a rear end of the mixer housing **12a** into a middle-front part of a cavity of the mixer housing **12a**, A front end of the high pressure steam injection pipe **12b** is sealed, steam nozzles **12b1** are distributed on a front part of a pipe wall of the high pressure steam injection pipe **12b**, and a high pressure steam inlet **12b2** is disposed at a rear end of the high pressure steam injection pipe **12b;** a water injection pipe **12d** is installed inside the high pressure steam inlet **12b2** in a rear part of the high pressure steam injection pipe **12b**, Water nozzles **12d1** are distributed on a part of the water injection pipe **12d** extended into the high pressure steam injection pipe **12b**, an inlet of the water injection pipe **12d** is disposed at an end thereof outside the high pressure steam injection pipe **12b** and connected to a solenoid valve **12h**. An outer wall of a rear part of the mixer housing **12a** is provided with a steam inlet for introducing in steam from the solar energy heat exchange system. A temperature detector **12e** is disposed on an outer wall of a front part of the mixer housing **12a.** A probe of the temperature detector **12e** is extended into the cavity of the mixer housing **12a**, A signal wire of the temperature detector **12e** is connected to a temperature controller **12f.** A control output terminal of the temperature controller **12f** is connected to the solenoid valve **12h** disposed at an end of the water injection pipe **12d** outside the high pressure steam injection pipe **12b**. A front end of the mixer housing **12a** is a mixed steam outlet.

A liner tube **12c** is disposed in a middle-rear part of the high pressure steam injection pipe **12b**. The liner tube **12c** is disposed between the high pressure steam inlet and a rear part of a distributed region of the steam nozzles **12b1**. An arranged area of the steam nozzles **12b1** is approximately one third of the steam injection pipe **12b.** An arranged area of the liner tube **12c** is approximately two thirds of the steam injection pipe **12b**, and outer rings at two ends of the liner tube **12c** are sealed from the mixer housing **12a.**

Parameters of a high pressure steam of the gas exhaust heat system **8** are as follows: a high pressure of 10 megapascal or a middle pressure of 3.82 megapascal, and a steam temperature of 485°C. Parameters of a steam of the solar energy heat exchange system **11** are as follows: a high pressure of 10 megapascal or a middle pressure of 3.82 megapascal, and a steam temperature of 390°C. A temperature of a mixed steam supplied to the steam turbine **13** is 435°C.

The mixed gas is regulated as follows: generally, the temperature of the mixed steam does not exceed 450°C, which satisfies the inlet steam of the turbine. In conditions of weak sunlight or in the absence of the sunlight, the flow of the solar energy photothermal steam is relatively small, and the temperature of the mixed gas may exceeds 450°C. By measuring the temperature of the mixed gas and automatically regulating the water flow in the water injection pipe, the regulation and the control of the temperature of the mixed gas is realized.

The high pressure steam from the gas exhaust heat system enters the high pressure steam injection pipe **12b,** and axially flows inside the high pressure steam injection pipe **12b**, during which, the high pressure steam passes through the water injection pipe **12d** and the liner tube and is then ejected via the steam nozzles **12b1** radically arranged on the high pressure steam pipe **12b**. The solar energy photothermal steam enters the steam mixing regulating system via the steam inlet for introducing in steam from the solar energy heat exchange system, and flows axially in the steam mixing regulating system, and is mixed with the high temperature steam from the gas exhausted heat system, The temperature of the mixed steam is measured by the temperature detector **12e** and then sent to a temperature controller **12f.** By computing process, the variation trend of the temperature of the mixed gas is obtained by the temperature controller **12f,** and it is determined whether the steam temperature is too high or too low. Thereafter, the solenoid valve for controlling the water is adjusted to execute the action of on, off, increase, or decrease of the water flow.

The effect of the steam mixing regulating system is as follows:
1. The steam mixing regulating system realizes a combination of the solar energy heat and the steam Rankine cycle of the BIGCC, thus overcome problems that the exhaust heat boiler or the steam turbine is unable to separately accomplish the combined objective.
2. Two steams of different temperatures are mixed into a steam of the same parameter, satisfying the requirements on the gas parameters of the gas turbine;
3. The gas inlet system and structure of the gas turbine are simplified, thus saving the production cost of the turbine device.
4. A large fluctuation of the gas temperature is prevented from shocking the turbine, thus ensuring safe and stable operation of the turbine.

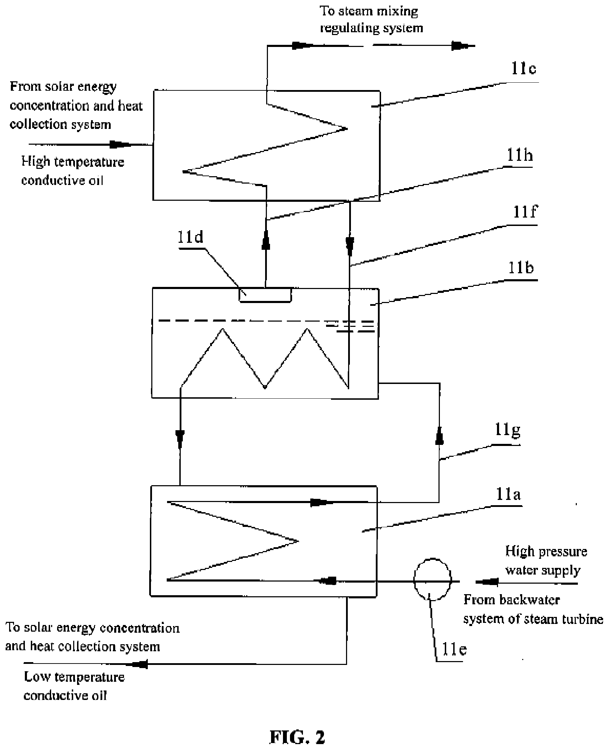

FIG 2 is a structure diagram of a solar energy heat exchange system.

The solar energy heat exchange system **11** comprises: a heater **11a**, an evaporator **11b**, and a superheater **11c**. The superheater **11c** is connected to a conductive oil system of the solar energy concentration and heat collection system 9. A conductive oil pipe **11f** passes through the evaporator **11b** and the heater **11a,** A low temperature conductive oil outlet of the heater **11a** is connected to an oil return port of the conductive oil system of the solar energy concentration and heat collection system 9. A heat exchange water pipe **11g** is disposed inside the heater **11a**, and the heat exchange water pipe **11g** is connected an internal of the evaporator **11b**. A steam-water separator **11d** is disposed at an upper end of the evaporator **11b.** A steam outlet of the steam-water separator **11d** is connected to a steam pipe **11h,** the steam pipe **11h** passes through the superheater **11c**, and an outlet of the superheater **11c** is connected to the steam mixing regulating system **12.**

Working process of the solar energy heat exchange system is as follows: water from a water supply pump **11e** enters the heater **11a**, where water absorbs heat quantity until approaching a saturated state. The saturated water then enters the evaporator **11b,** where the water is heated, converted into saturated steam, and separated by the steam-water separator **11d.** The saturated steam is introduced to the superheater **11c** and the saturated water is returned and continued evaporation. The saturated steam is heated into superheated steam of a temperature of approximately 390°C by the superheater **11c** and the superheated steam is then discharged from the steam pipe **11h**. The heat source of the heat exchange system is from the solar energy concentration and heat collection system. The high temperature conductive is transported to the superheater 11 by the high temperature conductive oil pipe, then to the evaporator **11b** and the heater **11a** respectively, to convey the carried heat quantity to the steam and the water and then be transformed into low temperature conductive oil. The low temperature conductive oil passes through the low temperature conductive oil pipe and is introduced to the light field heat gathering system for further heating. Thus, the heat exchange process of the light and the heat of the solar energy is completed by such repeated cycles.

The gasification of the biomass raw material is finished in the biomass gasification device to produce a crude gas. The crude gas is transported to the gas purification device **2** for purification treatments including washing, cooling, dust removing, and desulfurization to remove impurities including dusts and sulfides from the crude gas, a clean gas is then compressed by the first gas compressor **3** and introduced to the combustion chamber **5.** In another path, oxygen gas prepared by an oxygen preparing device is compressed by the Second gas compressor **4** and introduced to the combustion chamber **5,** so that the fuel gas is combusted in the combustion chamber **5** in the presence of the oxygen gas. The produced high temperature and high pressure flue gas enters the gas turbine **6** and does work by expansion, the gas power generator **7** is driven for power generation, thus Braden cycle of the gas turbine is accomplished and the power generation process of the gas turbine is realized.

The high temperature flue gas discharged from the gas turbine **6** is introduced to the gas exhaust heat system **8** and heat exchange is performed among the high temperature flue gas and the high or low pressure heating surface of the exhaust heat system of the gas turbine to produce steams of high pressure and low pressure. The temperature of the high pressure steam can reach between 450 and 485°C, and enters the high pressure cylinder of the steam turbine **13** as a primary steam after mixing with the photothermal steam and temperature regulation. The exhaust heat low pressure steam is adopted as a supplementary steam to enter the low pressure cylinder of the steam turbine to do work while expanding, thus driving the generator **14** to generate power and realizing the power generation process of the Rankine cycle of the steam.

The solar energy concentration and heat collection system **9** is arranged in parallel to the exhaust heat system of the gas turbine and includes a parabolic concentrator, an evacuated collector tube, a light field bracket, a tracking driving device, and the conductive oil system. According to the light source condition and the set photothermal generation capacity and the time for energy storage, the area of the condenser field and the number of the collector tubes are determined, and the radiation energy of the sun is converted into the heat energy of the conductive oil by light concentration and heat collection. In the day time, one part of the high temperature conductive oil is directly introduced to the solar energy heat exchange system **11** where the heat exchange is performed between the high temperature conductive oil and the water and steam to produce middle temperature steam at 390°C. Another part of the high temperature conductive oil exchanges heat with the solar energy heat storage system **10** to preserve excess heat energy in the heat storage system **10.** In nocturnal period, the solar energy heat storage system **10** releases heat to satisfy the required heat quantity for power generation. The conductive oil cooled in the solar energy heat exchange system **11** is then returned to the solar energy heat collecting system 9 where the conductive oil is reheated for subsequent cycle.

In diurnal period, one part of the high temperature conductive oil is directly introduced to the solar energy heat exchange system to exchange heat with the water and the steam. A high temperature steam from the exhaust heat system of the turbine and the middle temperature steam from the solar energy heat exchange system are mixed in the steam mixing regulating system **12.** To prevent large amplitude fluctuation of the temperature of the mixed steam and to avoid the shock of the thermal stress on the steam turbine, the flows of the two paths of steams and the mixing temperature are monitored. The temperature of the mixed steam is controlled within a range of between 400 and 450°C under the action of the steam temperature regulator assisted by the water injection regulation, besides, the steam temperature presents stable variation in gradual increase or decrease trend, thus satisfying the requirements of steam intake on the steam turbine **13**,

The solar energy heat storage system primarily includes a hot tank, a cold tank, an oil-salt heat exchanger, a molten salt pump, and an associated pipe system. In day time or periods of strong sunlight, in addition to a part of the light and the heat is directly supplied for power generation, most of the light and the heat pass through the oil-salt heat exchanger and heat a molten salt medium in the cold tank to a set temperature, and the molten salt medium is then transported to the hot tank for storage. In the night or periods of weak sunlight when the light field is unable to satisfy the heat quantity required for power generation, the energy is supplied by the heat storage system via heat release. The molten salt medium in the hot tank is pumped and returned to the oil-salt heat exchanger to heat the conductive oil of the light field. The heat quantity is returned by the conductive oil for power generation, and the cooled molten slat is transported to the cold tank for storage. Thus, by repeated cycle, the photothermal release and storage functions are accomplished.

## Claims

1. A combined power generation system integrated with solar energy and BIGCC, the system comprising: a solar energy concentration and heat collection system (9), a biomass gasification device (1), a gas generator (7), a steam turbine (13), and a steam generator (14), **characterized in that** the solar energy concentration and heat collection system (9) is connected to a solar energy heat exchange system (11); the biomass gasification device (1) is connected to the gas generator (7) via a first gas compressor (3), a combustion chamber (5), and a gas turbine (6); an output of the gas turbine (6) is also connected to a gas exhaust heat system (8); a low pressure steam output of the gas exhaust heat system (8) is connected to a middle-lower pressure cylinder of the steam turbine (13); a high pressure steam output of the gas exhaust heat system (8) and a high pressure steam output of the solar energy heat exchange system (11) are connected to a steam mixing regulating system (12); an output of the steam mixing regulating system (12) is connected to a high pressure cylinder of the steam turbine (13).

2. The system of claim 1, **characterized in that**
the steam mixing regulating system (12) comprises a mixer housing (12a); a high pressure steam injection pipe (12b) is protruded from a rear end of the mixer housing (12a) into a middle-front part of a cavity of the mixer housing (12a); a front end of the high pressure steam injection pipe (12b) is sealed, steam nozzles (12b1) are distributed on a front part of a pipe wall of the high pressure steam injection pipe (12b), and a high pressure steam inlet (12b2) is disposed at a rear end of the high pressure steam injection pipe (12b); a water injection pipe (12d) is installed inside the high pressure steam inlet (12b2) in a rear part of the high pressure steam injection pipe (12b); water nozzles (12d1) are distributed on a part of the water injection pipe (12d) extended into the high pressure steam injection pipe (12b), an inlet of the water injection pipe (12d) is disposed at an end thereof outside the high pressure steam injection pipe (12b) and connected to a solenoid valve (12h);
an outer wall of a rear part of the mixer housing (12a) is provided with a steam inlet for introducing in steam from the solar energy heat exchange system;
a temperature detector (12e) is disposed on an outer wall of a front part of the mixer housing (12a); a probe of the temperature detector (12e) is extended into the cavity of the mixer housing (12a); a signal wire of the temperature detector (12e) is connected to a temperature controller (12f); a control output terminal of the temperature controller (12f) is connected to the solenoid valve (12h) disposed at an end of the water injection pipe (12d) outside the high pressure steam injection pipe (12b); and a front end of the mixer housing (12a) is a mixed steam outlet.

3. The system of claim 2, **characterized in that** a liner tube (12c) is disposed in a middle-rear part of the high pressure steam injection pipe (12b); the liner tube (12c) is disposed between the high pressure steam inlet and a rear part of a distributed region of the steam nozzles (12b1); and outer rings at two ends of the liner tube (12c) are sealed from the mixer housing (12a).

4. The system of claim 1, 2, or 3, **characterized in that**
the solar energy heat exchange system (11) comprises: a heater (11 a), an evaporator (11b), and a superheater (11c); the superheater (11c) is connected to a conductive oil system of the solar energy concentration and heat collection system (9); a conductive oil pipe (11f) passes through the evaporator (11b) and the heater (11a); a low temperature conductive oil outlet of the heater (11a) is connected to an oil return port of the conductive oil system of the solar energy concentration and heat collection system (9);
a heat exchange water pipe (11g) is disposed inside the heater (11a), and the heat exchange water pipe (11 g) is connected an internal of the evaporator (1 1b); a steam-water separator (11d) is disposed at an upper end of the evaporator (11b); a steam outlet of the steam-water separator (11d) is connected to a steam pipe (11h), the steam pipe (11b) passes through the superheater (11c), and an outlet of the superheater (11c) is connected to the steam mixing regulating system (12).

5. The system of claim 1, 2, or 3, **characterized in that** parameters of a high pressure steam of the gas exhaust heat system (8) are as follows: a high pressure of 10 megapascal or a middle pressure of 3.82 megapascal, and a steam temperature of 485°C; parameters of a steam of the solar energy heat exchange system (11) are as follows; a high pressure of 10 megapascal or a middle pressure of 3.82 megapascal, and a steam temperature of 390°C; and a temperature of a mixed steam supplied to the steam turbine (13) is 435°C.

6. The system of claim 4, **characterized in that** parameters of a high pressure steam of the gas exhaust heat system (8) are as follows: a high pressure of 10 megapascal or a middle pressure of 3.82 megapascal, and a steam temperature of 485°C; parameters of a steam of the solar energy heat exchange system (11) are as follows: a high pressure of 10 megapascal or a middle pressure of 3.82 megapascal, and a steam temperature of 390°C; and a temperature of a mixed steam supplied to the steam turbine (13) is 435°C.

7. The system of claim 1, 2, or 3, **characterized in that** the system further comprises a solar energy heat storage system (10); and the solar energy heat storage system (10) is respectively connected to the solar energy heat exchange system and the solar energy concentration and heat collection system (9).

8. The system of claim 4, **characterized in that** the system further comprises a solar energy heat storage system (10); and the solar energy heat storage system (10) is respectively connected to the solar energy heat exchange system and the solar energy concentration and heat collection system (9).

9. The system of claim of claim 5, **characterized in that** the system further comprises a solar energy heat storage system (10); and the solar energy heat storage system (10) is respectively connected to the solar energy heat exchange system and the solar energy concentration and heat collection system (9).

10. The system of claim of claim 6, **characterized in that** the system further comprises a solar energy heat storage system (10); and the solar energy heat storage system (10) is respectively connected to the solar energy heat exchange system and the solar energy concentration and heat collection system (9).
